## Europäisches Patentamt
## European Patent Office
## Office européen des brevets

(19)

(11) Veröffentlichungsnummer: **0 186 625**
**B1**

(12) # EUROPÄISCHE PATENTSCHRIFT

(45) Veröffentlichungstag der Patentschrift:
20.07.88

(51) Int. Cl.⁴: **B 62 D 25/20**

(21) Anmeldenummer: **85810579.4**

(22) Anmeldetag: **06.12.85**

---

(54) **Fahrzeug-Chassis.**

---

(30) Priorität: **20.12.84 CH 6122/84**

(43) Veröffentlichungstag der Anmeldung:
**02.07.86 Patentblatt 86/27**

(45) Bekanntmachung des Hinweises auf die Patenterteilung:
**20.07.88 Patentblatt 88/29**

(84) Benannte Vertragsstaaten:
**AT BE CH DE FR GB IT LI LU NL SE**

(56) Entgegenhaltungen:
**DE-A-2 531 745**
**US-A-3 143 981**

**Sonderdruck aus Schweizer Aluminium Rundschau 6/79, Seiten 235-242, "Fahrgestelle aus Aluminium"**

(73) Patentinhaber: **SCHWEIZERISCHE ALUMINIUM AG, CH- 3965 Chippis (CH)**

(72) Erfinder: **Angehrn, Guido, Im Sträler 3, CH- 8047 Zürich (CH)**
Erfinder: **Utz, Manfred, Pfruendhofstrasse 19, CH- 8910 Affoltern a.A. (CH)**

---

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die vorliegende Erfindung bezieht sich auf ein Chassis für Fahrzeuge, insbesondere aus einer Aluminiumlegierung, mit Längs- und diese durchgreifenden Querträgern und einem Außenrahmen, zur Aufnahme von in Längsrichtung verlaufenden Bodenplanken.

Bekannte Aluminium-Chassis (siehe sonderdruck "Fahrgestelle aus Aluminium-Konstruktion und Wirtschaftlichkeit" aus Schweizer Aluminium Rundschau 6/79, Seiten 235-242) dieser Art besitzen als Hauptbestandteile meistens zwei Längsträger sowie eine Anzahl in geeignetem Abstand zueinander angeordneter, als Profile runden Querschnitts ausgebildeter Querträger, welche die Längsträger zusammenhalten und unter Zwischenschaltung von aufgekippten, eine Auflagefläche bildenden Profilen die längsverlegten Bodenplanken aufnehmen und unterstützen.

Bei einer vor allem für leichtere Fahrzeuge bestimmten Bauart solcher Chassis sind die Längsprofile des Aussenrahmens gleichzeitig als Längsträger ausgebildet; wobei die Querträger daran stirnseitig verbunden sind. Zum Aussenrahmen gehören noch zwei Querprofile. Man spricht dann von Chassis mit außenliegendem Tragrahmen.

Bei einer anderen, vor allem für schwerere Fahrzeuge bestimmten Bauart sind spezielle, in Abstand von den Chassislängsseiten verlaufende, als Hauptlängsträger wirkende Längsträger vorhanden, wobei dann der Außenrahmen durch zwei besondere Rahmenlängsprofile sowie zwei Querprofile gebildet wird; die Querträger sind durch im Steg der Längsträger ausgesparte Löcher durchgesteckt und stossen stirnseitig an die Außenrahmenlängsprofile an. Man spricht dann von einem Chassis mit innenliegendem Tragrahmen.

Bei diesen beiden Arten von Aluminium-Chassis hat man bisher, wie bei Stahl-Chassis üblich, die Längs- und Querträger und die Rahmenlängs- und -querprofile durch Schweißen - miteinander verbunden, wobei an den Querträgern die Schweißnähte rundum angebracht wurden.

Obwohl sich solche geschweißte Aluminium-Chassis festigkeitsmäßig als einwandfrei erwiesen haben, hat es sich in der Praxis gezeigt, daß sie noch mit einigen Mängeln behaftet sind: Zunächst verursachen die Schweißstellen zwischen den Querträgerstirnseiten und den Außenrahmenprofilen Schönheitsfehler an der sichtbaren Außenseite dieser Profile. Ferner sind die erforderlichen Schweißarbeiten zeitaufwendig. Vor allem aber werden Reparaturarbeiten, z. B. infolge eines Unfalls, kompliziert und zeitraubend.

Die Erfinder haben sich die Aufgabe gestellt, für ein Aluminium-Chassis eine neuartige Bauart zu schaffen, damit der Zusammenbau der Querträger mit den Längsträgern und den Rahmenprofilen sowie nach Verkehrsschäden notwendig gewordene Reparaturarbeiten erleichtert werden.

Diese Aufgabe wird erfindungsgemäß dadurch gelöst, dass die Querträger mit mindestens einer hinterschnittenen Rinne versehen und durch Winkelstücke an den Längsträgern und/oder an den Außenrahmenlängsprofilen befestigt sind, wobei ein Schenkel des Winkelstücks mittels eines Schraubbolzens und eines hinter die Ränder der hinterschnittenen Rinnen greifenden Mutterstücks an einer im montierten Zustand vertikalen Seite der Querträger befestigt und der andere Schenkel des Winkelstücks am Steg des Längsträgers verschraubt und/oder am Außenrahmenlängsprofil mittels eines Schraubenbolzens und eines hinter die Ränder der hinterschnittenen Rinnen greifenden Mutterstücks befestigt ist.

Die Schweißverbindungen im Fahrzeugchassis werden erfindungsgemäß durch lösbare, montagefreundliche Schraubverbindungen ersetzt.

Dabei sind am Querträger die hinterschnittenen Rinnen vorteilhafterweise an mindestens einer der im montierten Zustand vertikal stehenden Seiten des Trägers angeordnet, wobei dann im wesentlichen einfache L-förmige Winkelstücke verwendet werden. Es ist jedoch auch möglich, wenn die Höhe des Steges der Längsträger es gestattet, die hinterschnittene Rinne auf der unteren Seite des Querträgers anzubringen. In einem solchen Fall können ebenfalls einfache L-förmige Winkelstücke verwendet werden, dessen andere Schenkel unterhalb des Querträgers am Längsträger verbunden werden, oder aber z. B. sattelförmige Winkelstücke mit sich beidseitig des Querträgers erstreckenden Schenkeln zur Befestigung am Längsträger.

Die bei der Erfindung verwendeten Querträger können als offene Profile oder aber vorteilhaft als Hohlprofile ausgebildet sein. Dabei können sie einen viereckigen, z. B. quadratischen Querschnitt, gegebenenfalls mit mehr oder weniger weitreichenden Abrundungen, aufweisen.

Die Mutterstücke, welche hinter die Ränder der hinterschnittenen Rinnen greifen, sind vorzugsweise parallelogrammförmige Klemmstücke, die in bezug auf ihre Höhe kleiner sind als die Breite der Rinnenöffnungsschlitze. Die Klemmstücke können mit den Schraubenbolzen auf den Winkelstücken vormontiert und ihre Längsrichtung in Richtung der Schenkel des Winkelstücks gerichtet werden. Nun können die vormontierten Winkelstücke von vorne in die beiden zu verbindenden Profile eingeführt und anschließend verschraubt werden, wobei sich das Klemmstück dreht und in der hinterschnittenen Rinne verankert. Die vormontierten Winkelstücke erlauben eine problemlose Montage in jeder Lage. Insbesondere bei vertikaler oder nahezu vertikaler Lage einer hinterschnittenen Rinne machen vormontierte Winkelstücke eine einfache Montage erst möglich.

Das erfindungsgemäße Chassis kann für Fahrzeuge aller Art, z. B. Straßenfahrzeuge, wie Lastwagen, Anhänger, Sattelschlepper oder Schienenfahrzeuge, insbesondere Güterwagen, verwendet werden, wobei das Chassis beispielsweise Pritschen-, Koffer- und Kühlaufbauten aufnimmt.

Weitere Einzelheiten der Erfindung sind nachstehend an Hand der in den Figuren schematisch dargestellten Ausführungsbeispiele bei einem Chassis mit Innenrahmen näher beschrieben.

Es zeigen:

Fig. 1 : Eine Perspektivansicht auf einen Abschnitt eines erfindungsgemäßen Chassis mit Innenrahmen, von unten gesehen.

Fig. 2 : Einen Knotenpunkt zwischen Querträger und Längsträger mit im Querschnitt gezeigtem Längsträger.

Fig. 3 : Denselben Knotenpunkt, jedoch mit dem Querträger im Querschnitt.

Fig 4-6 : Drei Varianten des Querträgers im Querschnitt.

Fig. 7 : Ein Längsprofil des Außenrahmens mit stirnseitig daran befestigtem Querträger.

Fig. 8 : Die gleiche Verbindung in Draufsicht.

Fig. 9 : Eine Ecke des Außenrahmens mit miteinander verbundenen Längs- und Querprofilen.

Fig. 10/11 : Zwei Varianten des Längsträgers im Querschnitt.

Fig. 12/13 : Eine Art der Befestigung von Bodenplanken aus Aluminiumprofilen am Querträger, im Querschnitt, bzw. im Längsschnitt der Planken.

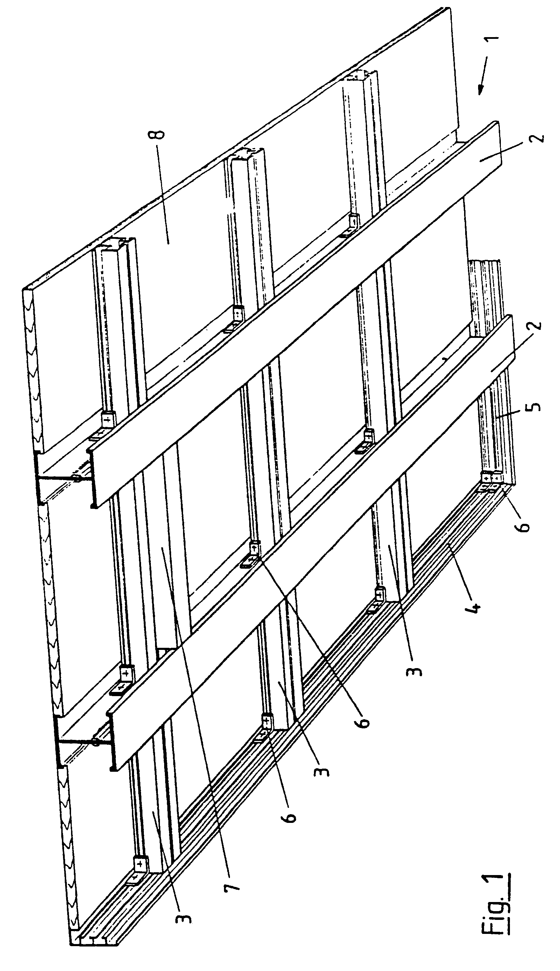

Wie aus Fig. 1 ersichtlich, besteht das Chassis 1 mit Innenrahmen im wesentlichen aus zwei Längsträgern 2, einer Anzahl Querträgern 3 sowie einem Außenrahmen aus zwei Längsprofilen 4 und zwei Querprofilen 5 (nur zum Teil gezeichnet). Diese Teile sind untereinander mittels verschraubter Winkelstücke 6 fest verbunden. Wo nötig, z. B. im Bereich der Achsbefestigungen, Sattelstützen und Königszapfen, können die Querträger zwischen den Längsträgern durch Traversen 7 ergänzt werden. Zur Bildung des Ladebodens dienen auf den Querträgern längsverlegte Bodenplanken 8, z. B. aus Holz oder Aluminiumprofilen, welche lediglich durch die fluchtende obere Fläche 33 der Längsträger 2 unterbrochen sind.

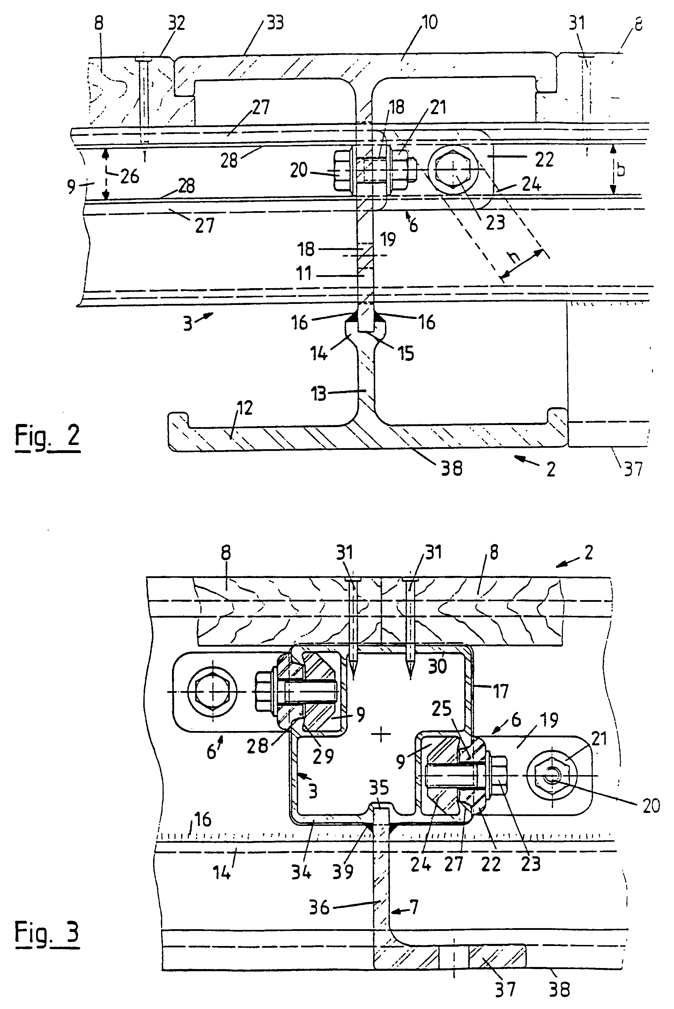

Die neuartige Gestaltung der Querträger 3 sowie deren Verbindungsweise mit den Längsträgern 2 ist in Fig. 2 und 3 zu erkennen: In dieser Ausführungsform ist der Querträger 3 im wesentlichen als rechteckiger Hohlbalken mit abgerundeten Kanten gestaltet. Auf seinen beiden im montierten Zustand vertikal stehenden Seiten ist er mit je einer hinterschnitten Rinne 9 versehen. Diese Rinnen 9 sind in den beiden diagonal gegenüberstehenden Ecken des Trägers angeordnet.

Die in Fig. 2 und 3 dargestellten Längsträger 2 sind insbesondere für Sattelanhänger entwickelt und weisen über ihre Länge eine variierende Höhe auf (schwanenhalsförmige Gestaltung). Sie bestehen aus einem oberen T-Profil 10 mit relativ hohem Steg 11 und einem unteren T-Profil 12 mit kurzem Steg 13, dessen freier Rand mit einer Verdickung 14 mit Nut 15 versehen ist. Die verschiedenen gewünschten Steghöhen werden durch Abschneiden des Steges 11 des oberen T-Profils 10 vorbereitet. Nach dem Einführen des Steges 11 des oberen Teils in die Nut 15 des unteren T-Profils 12 werden beide Teile durch Schweißnähte 16 miteinander verbunden. Längsträger mit konstanter Steghöhe, gleichgültig ob aus zwei Teilen zusammengesetzt oder einstückig hergestellt, kommen bei der vorliegenden Erfindung selbstverständlich auch in Betracht.

Zur Herstellung des Chassis werden im Steg 11 der Längsträger 2 zum Einführen der Querträger 3 Löcher 17 entsprechender Form sowie Bohrungen 18 für Schraubbolzen ausgespart, z. B. durch Stanzen, Bohren oder Fräsen.

Die Befestigung der Querträger 3 mit den Längsträgern 2 erfolgt mittels Winkelstücken 6, deren Schenkel 19 durch Schraubenbolzen 20 mit Muttern 21 am Längsträger 2 bzw. deren Schenkel 22 durch Schraubenbolzen 23 mit Mutterstück 24 am Querträger 3 befestigt sind. Die Schraubenbolzen 20, 23 sind vorzugsweise selbstsichernd ausgestaltet.

Bei diesen Winkelstücken 6 weist der eine Schenkel 19 eine ebene Auflagefläche zum Anliegen auf der ebenen Fläche des Steges 11 des Längsträgers 2 auf. Der andere Schenkel 22 weist eine längliche Erhebung 25 auf, welche in den Öffnungschlitz 26 der Breite b der hinterschnittenen Rinne 9 paßt und einen festen, verdrehungsfreien Sitz des Winkelstücks am Querträger 3 gewährleistet. Für den entsprechenden Schraubbolzen 23 dient ein parallelogrammförmiges Mutterstück 24 der Höhe h als Schraubenmutter, welches von vorne durch den Rinnenöffnungsschlitz 26 eingeführt werden kann, sich beim Anziehen des Schraubenbolzens z. B. um etwa 50-60° dreht, hinter die vorspringenden Ränder 27 der hinterschnittenen Rinne 9 greift und sich verklemmt.

Vorzugsweise sind die dem Schlitz 26 zugewandten Flächen 28 der Ränder 27 sowie die entsprechenden anliegenden Flächen der Erhebung 25 am Winkelstückschenkel 22 in Richtung auf den mittleren Teil des Rinnenbodens leicht geneigt, derart, dass die Erhebung 25 in den Öffnungsschlitz 26 genau einpaßt. Dadurch positioniert sich das Winkelstück 6 beim Anziehen des Schraubbolzens 23 von selbst. Im weiteren sind die inneren Flachen 29 der Ränder 27 sowie die dort aufliegenden Flächen des Mutterstücks 24 gegen das Rinneninnere leicht geneigt. Durch diese beiden Maßnahmen wird die Verankerung der Winkelstücke 6 am Querträger 3 verbessert.

Die in montiertem Zustand oben liegende Fläche der Querträger 3 dient als ebene Auflagefläche 30 für die den Ladeboden bildenden Flanken a. Derartige Flanken aus Holz oder Aluminiumprofilen können z. B. mit Nägeln 31, Bohrschrauben oder Nieten an die Querträger 3 befestigt werden. Die obere Fläche 32 der Flanke 8 fluchtet mit der oberen Fläche 33 der Längsträger 2, welche also die Ladefläche mitbildet.

Im weiteren kann der Querträger 3 an seiner Sohle 34 mit einer Nut 35 versehen sein, die, sofern beim betreffenden Querträger erforderlich, zur Aufnahme des Randes des Steges 36 einer sich zwischen den Längsträgern 2 erstreckenden Traverse 7, z. B. in Form eines Winkel- oder T-Profils, deren Sohle 37 je nach Bedarf mit der Sohle 38 der Längsträger 2 fluchtet. Diese Traverse 7 ist im vorliegenden Fall mit dem Querträger 3 durch Schweißnähte 39 verbunden.

Querträger 3 mit im wesentlichen quadratischem Querschnitt, wie in Fig. 3 abgebildet, erfordern das Aussparen entsprechender eckiger Löcher 17 im Steg 11 der Längsträger 2. Solche eckigen Löcher können für den Längsträger wegen der bei den Ecken entstehenden Spannungskonzentrationen mehr oder weniger nachteilig sein.

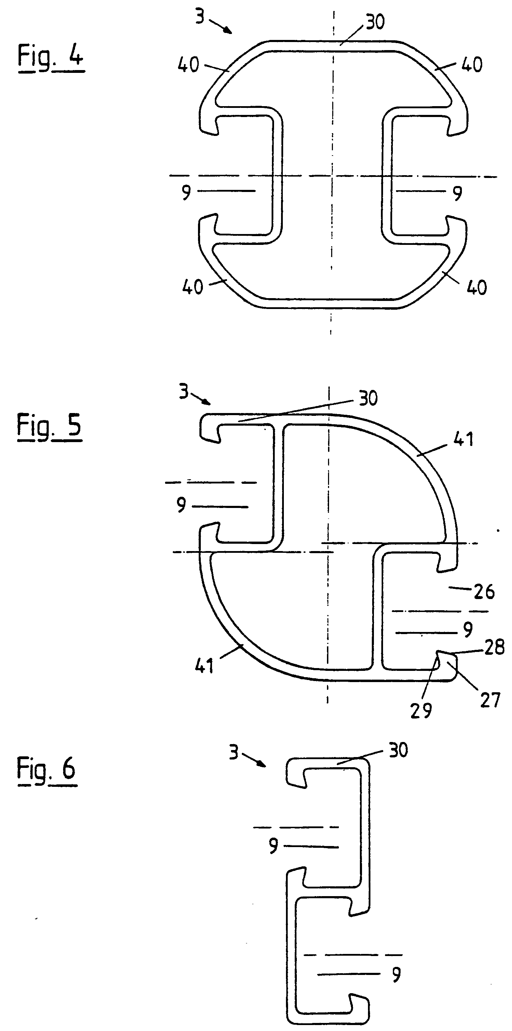

Mit Rücksicht darauf zeigt Fig. 4 einen Querträger 3, welcher im Querschnitt stark abgerundete Ecken aufweist, wobei die Abrundungen 40 je etwa 1/4 der Trägerbreite beanspruchen. Dementsprechend können die Löcher im Steg der Längsträger in abgerundeter Form ausgespart werden. Dieser Querträger 3 weist zwei gegenüberliegende, auf gleicher Höhe liegende hinterschnittene Rinnen 9 auf.

Eine weitere Ausführungsform mit Abrundungen ist in Fig. 5 gezeigt: Der Querträger 3 weist zwei diagonal entgegengesetzte Abrundungen 41, die etwa die Hälfte seiner Breite beanspruchen, sowie zwei diagonal entgegengesetzte hinterschnittene Rinnen 9 auf.

Im Rahmen der Erfindung können die Abrundungen 40, 41 ein anderes Ausmass der Trägerbreite beanspruchen und eine andere Kontur aufweisen.

Bei beiden Ausführungsformen nach Fig. 4 und 5 verbleibt oben am Querträger eine ebene Teilfläche als Auflagefläche für längsverlegte Planken 8.

In den oben beschriebenen Ausführungsformen ist der Querträger als Hohlbalken ausgestaltet. Dies ist jedoch nicht unbedingt erforderlich.

In Fig. 6 ist eine weitere mögliche Ausführungsform gezeigt, bei der der Querträger 3 als offenes Profil ausgebildet ist. Dieser Querträger ist im Querschnitt S-förmig und weist zwei hinterschnittene Nuten 9 auf, die eine auf der einen, die andere auf der anderen Vertikalseite des Trägers geöffnet. Er bietet ebenfalls oben eine ebene Auflagefläche 30 für die Beplankung. In Abänderung von Fig. 6 ist auch ein E-förmiger Querschnitt mit den beiden hinterschnittenen Nuten 9 auf der gleichen Vertikalseite des Profils geöffnet möglich.

Bei den Ausführungsformen nach den Figuren 4 bis 6 kann der Querträger 3 unten mit einer Nut 35 versehen sein, wie bei Fig. 3 gezeigt.

Hinsichtlich Kraftübertragung, besonders für Querträger 3 ohne Traverse 7, verläuft die Bodenbelastung über den oberen Teil der vertikalen Seitenwände der Querträger 3 zu den Winkelstücken 6 und wird durch die Schraubenbolzen 20 auf die Längsträger 2 übertragen.

In Hinblick darauf werden die im Steg 11 der Längsträger 2 ausgesparten Löcher 17 zweckmäßig etwas größer als entsprechend dem Querschnitt der Querträger 3 bemessen, so daß etwas Spiel zwischen den Querträgern 3 und den Längsträgern 2 verbleibt, beispielsweise 0,5-1 mm. Hierdurch sollen bei im Betrieb entstehenden Belastungen bzw. Verdrehungen des Chassis Reibungen zwischen diesen Bauteilen vermieden werden.

In Zusammenhang mit den beschriebenen Querträgern werden vorteilhafterweise für den Außenrahmen Profile verwendet, welche auf der Innenseite ebenfalls mit hinterschnittenen Rinnen versehen sind, was das Verbinden dieser Profile mit den Enden der Querträger sowie der Rahmenprofile untereinander an den Rahmenecken mit Winkelstücken gestattet.

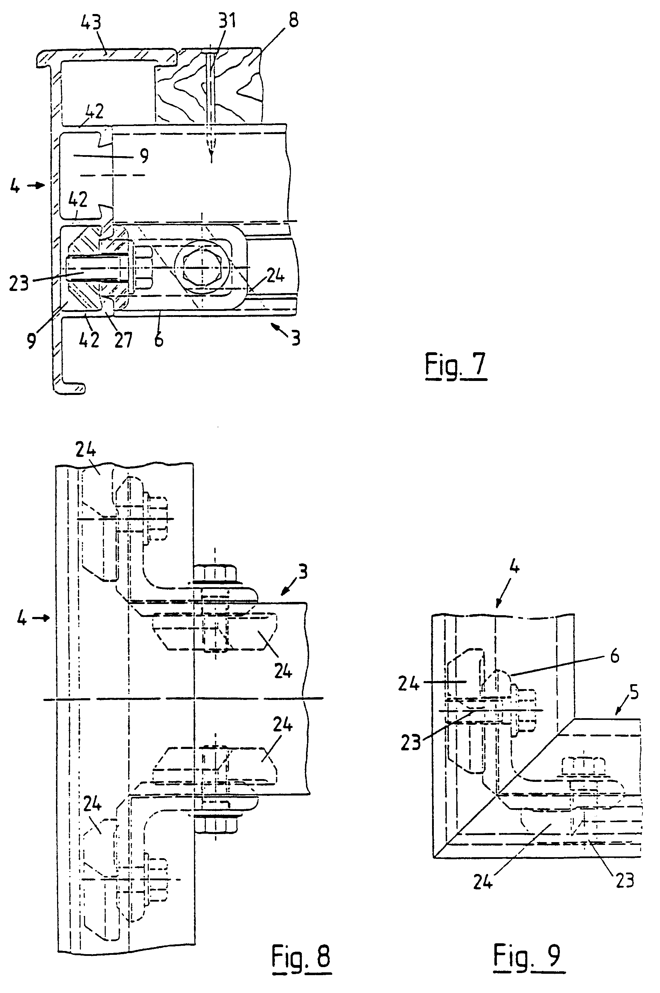

Ein Ausführungsbeispiel davon ist in der Fig. 7 und 8 bzw. in Fig. 9 veranschaulicht.

Wie im Querschnitt in Fig. 7 gezeigt, weist das Außenrahmenlängsprofil 4 auf seiner Innenseite drei Längsrippen 42 auf, welche untereinander zwei hinterschnittene Rinnen 9 ähnlicher Form wie diejenigen der Querträger bilden. Ein solches Profil 4 ist für den Zusammenbau mit Querträgern 3 nach der Fig. 3, 5 oder 6 mit zwei auf unterschiedlichen Höhen liegenden hinterschnittenen Rinnen 9 vorgesehen. Bei Querträgern mit zwei auf gleicher Höhe liegenden Rinnen 9, wie beispielsweise in Fig. 4 gezeigt, werden Außenrahmenprofile mit zwei, eine einzige hinterschnittene Rinne 9 begrenzenden Längsrippen 42 verwendet. Im weiteren weist das Außenrahmenprofil 4 einen oberen Flansch 43 auf, welcher den Rand der Ladefläche bildet.

Die Draufsicht von Fig. 8 zeigt die Lage der Winkelstücke 6 beim stirnseitigen Anschluß eines Querträgers 3 an ein Außenrahmenlängsprofil 4.

Die Draufsicht von Fig. 9 zeigt, wie in einer Ecke des Außenrahmens die in Gehrung geschnittenen Außenrahmenlängs- und -querprofile 4, 5 ähnlichen Querschnitts untereinander mittels ähnlicher Winkelstücke 6 verbunden werden können.

Zur Verbindung der Außenrahmenlängsprofile mit den Querträgern bzw. mit den Rahmenquerprofilen werden Winkelstücke verwendet, welche auf beiden Schenkeln eine in die Schlitzöffnung passende Erhebung 25 sowie für jeden Schraubbolzen hinter die Rinnenränder 27 greifende Mutterstücke 24 aufweisen.

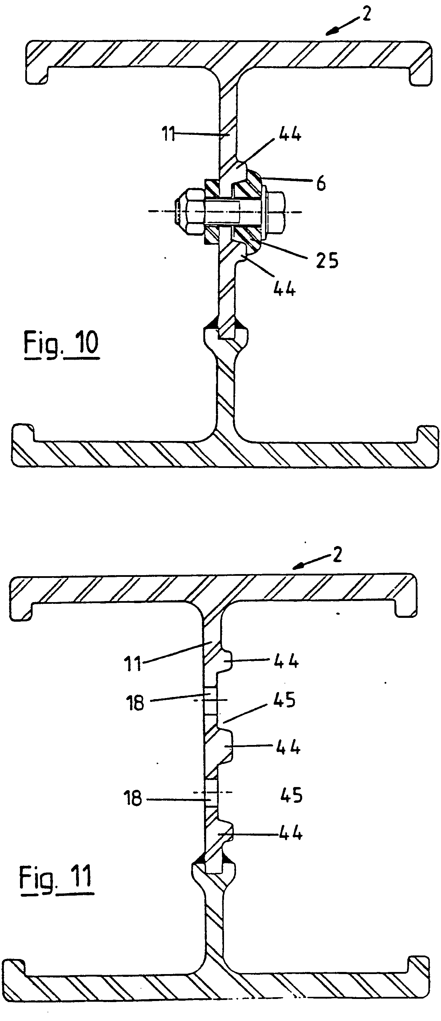

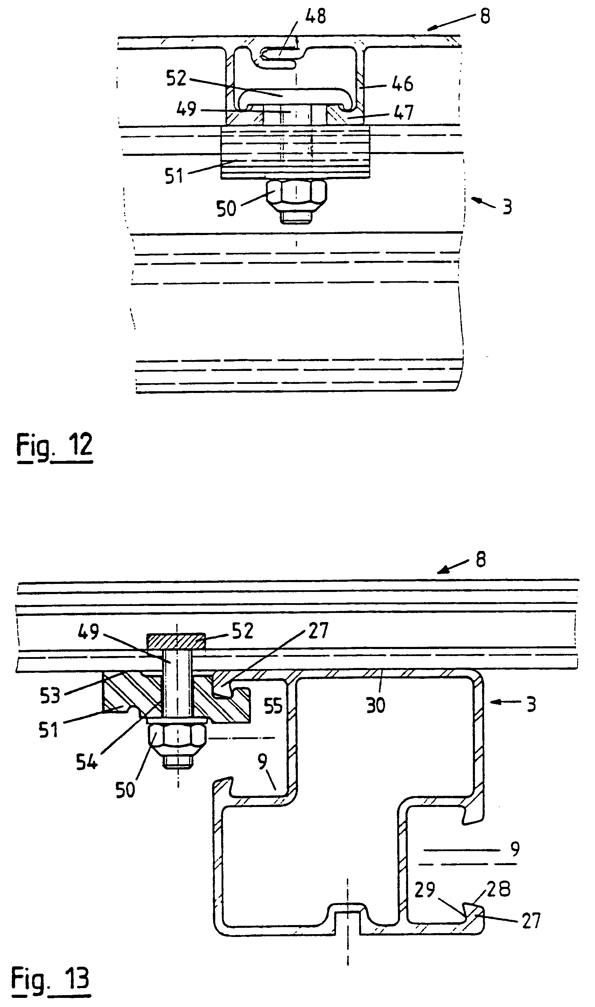

Ferner ist es zweckmäßig, wie in Fig. 10 und 11 gezeigt, die stranggepreßten Längsträger 2 an ihrem Steg 11 einseitig mit Längsrippen 44 zu versehen.

In der Ausführungsform nach Fig. 10 ist der Längsträger 2 mit zwei Längsrippen 44 versehen und daher mit Querträgern 3 mit zwei auf gleicher Höhe liegenden Rinnen 9, wie nach Fig. 4, zu verwenden. In der Ausführungsform nach Fig. 11 ist der Längsträger 2 mit drei Längsrippen 44 versehen und für Querträger mit auf unterschiedlicher Höhe angeordneten Rinnen 9, wie nach Fig. 3, 5 oder 6, bestimmt.

Beim Einsatz solcher Längsträger 2 mit Längsrippen 44 können dann Winkelstücke 6 verwendet werden, welche auf beiden Schenkeln eine Erhebung 25 aufweisen. Die eine dieser Erhebungen 25 fügt sich dann passend in der zwischen diesen Längsrippen 44 gebildeten Führungsrinne 45 ein, wobei die jeweilige untere Rippe die übertragene Bodenbelastung z. T. aufnehmen kann.

Dementsprechend wird bei der Herstellung der Längsträger 2 der Abstand zwischen den Längsrippen 44 vorgesehen, und die Höhe der Rippen wird so bemessen, dass die Winkelstücke sich darauf durch ihre beidseitig der Erhebung 25 liegenden Flächen abstützen.

Mit Längsrippen 44 versehene Längsträger 2 bieten den Vorteil, dass die gleiche Art von Winkelstücken 6 mit Erhebungen 25 auf beiden Schenkeln überall verwendet werden können, nämlich sowohl für die Verbindung der Außenrahmenlangsprofile mit den Rahmenquerprofilen und den Querträgern, wie auch für die Verbindung der Querträger mit den Längsträgern.

Es versteht sich von selbst, daß bei den Außenrahmenlängsprofilen sowie gegebenenfalls bei Längsträgern nach Fig. 10 und 11 die Längsrippen 42 bzw. 44 gegenüber der Aufladefläche auf passender Höhe anzubringen sind.

Bei Chassis der eingangs beschriebenen Art, mit tragendem Außenrahmen, also ohne den in Fig. 1 gezeigten Innenrahmen mit entsprechenden mittleren Längsträgern 2, übernehmen die Rahmenlängsprofile 4 die Funktion von Langsträgern. Dann können die Rahmenlängsprofile 4 im wesentlichen so ausgestaltet sein, wie anhand von Fig. 7 beschrieben, d.h. als offene Profile. Bei Bedarf, d.h. zur Erreichung einer höheren Festigkeit, können sie aber auch als Hohlprofile ausgebildet sein. Wesentlich bleibt bei solchen als Längsträger wirkenden Rahmenlängsprofilen, daß sie auf ihrer Innenseite eine oder zwei hinterschnittene Rinnen aufweisen, durch welche sie mit den Querträgern der beschriebenen Art mittels Winkelstücken der beschriebenen Art verbunden werden können.

Sowohl für Chassis mit tragendem Außenrahmen als auch für Chassis mit tragendem Innenrahmen bieten Querträger mit zwei auf unterschiedlichen Höhen angeordneten Rinnen 9, z. B. nach den Fig. 3, 5 oder 6, gegenüber Querträgern nach Fig. 4 mit beiden Rinnen 9 auf gleicher Höhe, den Vorteil, daß die Rahmenlängsprofile sowie auch die mittleren Längsträger durch auf zwei unterschiedlichen Höhen greifende Winkelstücke 6 an den Querträger 3 befestigt werden können, wodurch sich eine stabilere gegenseitige Fixierung, ohne Neigung zum Kippen, ergibt.

In den Figuren 12 und 13 ist eine besonders vorteilhafte Befestigungsart von Bodenplanken 8 aus Aluminiumprofilen auf einem erfindungsgemäßen Aluminium-Chassis dargestellt. Solche profilierten Planken 8 weisen Abstützrippen 46 mit Fuss 47 auf und können Rand an Rand durch Feder und Nut 48 ineinandergreifen. Sie lassen sich auf einfache Weise mittels Schraubbolzen 49 mit Mutter 50, unter Verwendung eines Klemmstücks 51, auf den Querträgern 3 befestigen. Hierzu weist der Schraubbolzen einen besonders ausgebildeten Kopf 52 auf, der hinter die Füsse 47 der Flanken 8 greift. Dieses Klemmstück 51 besitzt nach Fig. 13 einerseits eine Auflagefläche 53, mit der sie sich auf die Flanke abstützt, eine Bohrung 54 für den Schraubbolzen 49 und anderseits einen Vorsprung 55, der hinter den Rand 27 einer hinterschnittenen Rinne 9 greift. Besonders elegant läßt sich eine solche Klemmenbefestigung bei Querträgern 3 anwenden, die eine hinterschnittene Rinne 9 in einer oberen Ecke besitzen. Dies bildet einen weiteren Vorteil von mit in ihren Ecken angeordneten Rinnen 9 versehenen Querträgern 3.

An ihren Enden können solche Flanken 8 in gleicher Art an den oberen Rippen 42 der Querprofile 5 des Außenrahmens befestigt werden.

Generell werden durch die beschriebene Erfindung folgende Vorteile erreicht:

- Arbeitszeiteinsparung bei der Herstellung des Chassis, insbesondere dank der vormontierten Winkelstücke.

- Möglichkeit der Lieferung von vorfabrizierten Bauteilen mit damit verbundener einfacher Montage des Chassis ohne aufwendige Vorrichtungen.

- Immer gleiche Qualität der geschraubten Verbindung der Querträger zu den Längsträgern und zum Außenrahmen, anstelle von Schweißverbindungen, deren qualitative Ausführung erheblich aufwendiger ist.

- Schließlich kann bei einer geschraubten Ausführung der Außenrahmen anodisiert werden.

## Patentansprüche

1. Chassis für Fahrzeuge, insbesondere aus einer Aluminiumlegierung, mit Längs- und diese durchgreifenden Querträgern und einem Außenrahmen, zur Aufnahme von in Längsrichtung verlaufenden Bodenplanken, dadurch gekennzeichnet, daß die Querträger (3) mit mindestens einer hinterschnittenen Rinne (9) versehen sind und durch Winkelstücke (6) an den Längsträgern (2) und/oder an den Außenrahmenlängsprofilen (4) befestigt sind, wobei ein Schenkel (22) des Winkelstücks (6) mittels eines Schraubbolzens (23) und eines hinter die Ränder (27) der hinterschnittenen Rinnen (9) greifenden Mutterstücks (24) an einer im montierten Zustand vertikalen Seite der Querträger (3) befestigt, der andere Schenkel (19) des Winkelstücks (6) am Steg (11) des Längsträgers (2) verschraubt und/oder am Außenrahmenlängsprofil (4) mittels eines Schraubenbolzens (23) und eines hinter die Ränder (27) der hinterschnittenen Rinnen (9) greifenden Mutterstücks befestigt ist.

2. Chassis nach Anspruch 1, dadurch gekennzeichnet, daß die Querträger (3) als Hohlbalken ausgebildet und die Rinnen (9) in den diagonal gegenüberliegenden Ecken oder einander gegenüberliegend auf gleicher Höhe des Querträgers (3) angeordnet sind.

3. Chassis nach Anspruch 2, dadurch gekennzeichnet, daß die Querträger (3) als offenes Profil ausgebildet sind und einen S- bzw. E-förmigen Querschnitt aufweisen.

4. Chassis nach einem der Ansprüche 1 bis 3, dadurch gekennzeichnet, daß die im montierten Zustand oben liegende Fläche (28) der Querträger (3) als ebene Auflagefläche (30) für Bodenplanken (8) ausgebildet ist, wobei sich die ebene Auflagefläche (30) vorzugsweise nur auf einen Teil der Breite des Querträgers (3) erstreckt und ein- oder beidseitig dieser Auflagefläche (30) der Übergang zu den vertikalen Seitenwänden des Querträgers (3) durch Abrundungen (40, 41) erfolgt.

5. Chassis nach einem der Ansprüche 1 bis 4, dadurch gekennzeichnet, daß die Querträger (3) an ihrer Sohle (34) mit einer Nut (35) zur Aufnahme des Randes einer sich zwischen den Längsträgern (2) erstreckenden Traverse (7) versehen sind.

6. Chassis nach einem der Ansprüche 1 bis 5, dadurch gekennzeichnet, daß die Stege der einem Innenrahmen gehörenden Längsträger (2) mit Längsrippen (44) versehen sind, welche Führungsrinnen (45) für den einen Schenkel der Verbindungsstücke (6) bilden.

7. Chassis nach einem der Ansprüche 1 bis 5, dadurch gekennzeichnet, daß die Außenrahmenlängsprofile (4) zur Ausübung einer tragenden Funktion verstarkt, vorzugsweise als Hohlprofil, ausgebildet sind und entsprechend ausgebildete sackförmige Aussparungen zur Aufnahme der Querträger (3) haben.

8. Chassis nach einem der Ansprüche 1 bis 7, dadurch gekennzeichnet, daß die Mutterstücke als parallelogramm förmige Klemmstücke ausgebildet sind, wobei deren Höhe (h) kleiner ist als die Breite (b) des Öffnungsschlitzes (26) der hinterschnittenen Rinne (9).

9. Chassis nach einem der Ansprüche 1 bis 8, dadurch gekennzeichnet, daß der Steg der Längsträger (2) aus einem relativ hohen oberen Steg (11) und einem diesen in einer Nut (15) aufnehmenden unteren Steg (13) besteht, wodurch die Höhe der Längsträger über ihre Länge variierbar ist.

10. Chassis nach einem der Ansprüche 1 bis 9, dadurch gekennzeichnet, daß die ausgesparten Löcher (17) im Steg (11) der Längsträger bzw. die sackförmigen Aussparungen in den Außenrahmenlängsprofilen (4) einen etwas größeren Querschnitt als die Querträger (3) haben.

11. Chassis nach einem der Ansprüche 1 bis 10, dadurch gekennzeichnet, daß die Außenrahmenlängs (4) und Querprofile (5) auf Gehrung geschnitten und durch Winkelstücke (6) miteinander verbunden sind, wobei die Schenkel des Winkelstücks mittels eines Schraubenbolzens (23) und eines hinter die Ränder der hinterschnittenen Rinnen greifenden, vorzugsweise parallelogramm förmigen Mutterstücks befestigt sind.

## Claims

1. Chassis for vehicles, which is more particularly made of an aluminium alloy, and which comprises longitudinal bearers, cross bearers passing through the latter, and an external frame, and serves to receive floor planks extending in the longitudinal direction, characterized in that the cross bearers (3) are provided with at least one undercut channel (9) and are fastened by angle pieces (6) to the longitudinal bearers (2) and/or to the longitudinal sections (4) of the external frame, one arm (22) of the angle piece (6) being fastened, by means of a screw bolt (23) and of a nut member (24) engaging behind the edges (27) of the undercut channels (9), to a side of the cross bearers (3) whichis vertical in the assembled state, and the other arm (19) of the angle piece (6) being bolted to the web (11) of the longitudinal bearer (2) and/or fastened to the longitudinal section (4) of the external frame by means of a screw bolt (23) and of a nut member engaging behind the edges (27) of the undercut channels (9).

2. Chassis according to Claim 1, characterized in that the cross bearers (3) are in the form of hollow beams and the channels (9) are disposed in the diagonally opposite corners or opposite one another at the same height of the cross bearer (3).

3. Chassis according to Claim 2, characterized in that the cross bearers (3) are in the form of open sections and have an S shaped or E shaped cross section.

4. Chassis according to one of Claims 1 to 3, characterized in that the surface (28) of the cross bearers (3) which lies at the top in the assembled state is in the form of a flat support surface (30) for floor planks (8), the flat support surface (30) preferably extending only over a part of the width of the cross bearer (3) and the transition to the vertical side walls of the cross bearer (3) on one or both sides of said support surface (30) being in the form of rounded portions (40, 41).

5. Chassis according to one of Claims 1 to 4, characterized in that the cross bearers (3) are provided on their base (34) with a groove (35) to receive the edge of a tie (7) extending between the longitudinal bearers (2).

6. Chassis according to one of Claims 1 to 5, characterized in that the webs of the longitudinal bearers (2) belonging to an internal frame are provided with longitudinal ribs (44) which form guide channels (45) for one arm of the connecting members (6).

7. Chassis according to one of Claims 1 to 5, characterized in that the external frame longitudinal sections (4) are of strengthened construction, preferably in the form of hollow sections, in order to serve a carrying function, and have correspondingly formed bag shaped recesses to receive the cross bearers (3).

8. Chassis according to one of Claims 1 to 7, characterized in that the nut members are in the form of parallelogram shaped clamping members, their height (h) being smaller than the width (b) of the opening slot (26) of the undercut channel (9).

9. Chassis according to one of Claims 1 to 8, characterized in that the web of the longitudinal bearers (2) consists of a relatively tall upper web (11) and a lower web (13) receiving said upper web in a groove (15), whereby the height of the longitudinal bearers can be varied over their length.

10. Chassis according to one of Claims 1 to 9, characterized in that the holes (17) formed in the web (11) of the longitudinal bearers or the bag shaped recesses in the external frame longitudinal sections (4) have a slightly larger cross section than the cross bearers (3).

11. Chassis according to one of Claims 1 to 10, characterized in that the external frame longitudinal sections (4) and transverse sections (5) are mitred and joined together by angle pieces (6), the arms of the angle piece being fastened by means of a screw bolt (23) and of a preferably parallelogram shaped nut member engaging behind the edges of the undercut channels.

**Revendications**

1. Châssis pour véhicules, notamment en alliage d'aluminium, comprenant des longerons, des poutres transversales qui traversent ces longerons, et un cadre extérieur, châssis destiné à recevoir des planches de plancher s'étendant dans la direction longitudinale, caractérisé en ce que les poutres transversales (3) sont munies d'au moins une rainure à contre-dépouille (9) et sont fixées aux longerons (2) et/ou aux profilés longitudinaux (4) du cadre extérieur par des équerres (6), une branche (22) de l'équerre (6) étant fixée à une face des poutres transversales (3) qui est verticale dans l'état monté, au moyen d'une vis (23) et d'une pièce formant écrou (24) qui s'accroche derrière les bords (27) des rainures à contre-dépouille (9), tandis que l'autre branche (19) de l'équerre (6) est vissée sur l'âme (11) du longeron (2) et/ou est fixée au profilé longitudinal (4) du cadre extérieur au moyen d'une vis (23) et d'une pièce formant écrou qui s'accroche derrière les bords (27) des rainures à contre-dépouille (9).

2. Châssis selon la revendication 1, caractérisé en ce que les poutres transversales (3) sont constituées par des poutres creuses et que les rainures (9) sont disposées dans les angles de la poutre transversale (3) qui sont opposés en diagonale, ou encore, au même niveau de la poutre transversale (3), l'une en face de l'autre.

3. Châssis selon la revendication 2, caractérisé en ce que les poutres transversales (3) sont constituées par des profilés creux et présentent une section en S ou en E.

4. Châssis selon l'une des revendications 1 à 3, caractérisé en ce que la surface (28) des poutres transversales (3) qui est en position haute dans l'état monté forme une surface de portée plane (30) pour les planches de plancher (8), la surface de portée plane (30) ne s'étendant de préférence que sur une partie de la largeur de la poutre transversale (3) et le raccordement avec les parois latérales verticales de la poutre transversale (3) s'effectuant par des arrondis (40, 41) d'un côté ou de chaque côté de cette surface de portée (30).

5. Châssis selon l'une des revendications 1 à 4, caractérisé en ce que les poutres transversales (3) sont munies dans leurs semelles (34), d'une rainure (35) destinée à recevoir le bord d'une traverse (7) qui s'étend entre les longerons (2).

6. Châssis selon l'une des revendications 1 à 5, caractérisé en ce que les âmes des longerons (2) qui appartiennent à un cadre intérieur sont munies de nervures longitudinales (44) qui forment des rainures de guidage (45) pour l'une des branches des pièces d'assemblage (6).

7. Châssis selon l'une des revendications 1 à 5, caractérisé en ce que les profilés longitudinaux (4) du cadre extérieur sont d'une constitution renforcée, de préférence en forme de profilé creux, pour exercer une fonction porteuse et présentent des évidements borgnes de configuration appropriée, pour recevoir les poutres transversales (3).

8. Châssis selon l'une des revendications 1 à 7, caractérisé en ce que les pièces formant écrous constituent des éléments de serrage en forme de parallélogramme, dont la hauteur (h) est plus petite que la largeur (b) de la fente d'ouverture (26) de la rainure à contre-dépouille (9).

9. Châssis selon l'une des revendications 1 à 8, caractérisé en ce que l'âme des longerons (2) est composée d'une âme supérieure (11) relativement haute et d'une âme inférieure (13) qui reçoit la première dans une rainure (15), de sorte que la hauteur du longeron peut être variable sur sa longueur.

10. Châssis selon l'une des revendications 1 à 9, caractérisé en ce que les trous (17) ménagés dans l'âme (11) des longerons ou les évidements borgnes ménagés dans les profilés longitudinaux (4) du cadre extérieur ont une section un peu supérieure à celle des poutres transversales (3).

11. Châssis selon l'une des revendications 1 à 10, caractérisé en ce que les profilés longitudinaux (4) et transversaux (5) du cadre extérieur sont coupés en onglet et assemblés les uns aux autres par des équerres (6), les branches de chaque équerre étant fixées, au moyen d'une vis (23) et d'une pièce formant écrou, de préférence en forme de parallélogramme, qui s'accroche derrière les bords des rainures à contre-dépouille.

Fig. 1

**0 186 625**

Fig. 2

Fig. 3

3

**0 186 625**

Fig. 4

Fig. 5

Fig. 6

Fig. 7

Fig. 8

Fig. 9

2

11 ── 44

── 6

25

44

Fig. 10

2

11 ── 44

18 ── ── 45

── 44

18 ── ── 45

── 44

Fig. 11

Fig. 12

Fig. 13